Europäisches Patentamt

European Patent Office

Office européen des brevets

(11) Publication number: **0 441 397 A1**

# EUROPEAN PATENT APPLICATION

(21) Application number: 91101768.9

(22) Date of filing: 08.02.91

(51) Int. Cl.⁵: **B25J 9/00**, B25J 9/08, B25J 19/02

(30) Priority: 09.02.90 JP 28293/90

(43) Date of publication of application:
14.08.91 Bulletin 91/33

(84) Designated Contracting States:
**DE**

(71) Applicant: **HITACHI, LTD.**
**6, Kanda Surugadai 4-chome**
**Chiyoda-ku, Tokyo 101(JP)**

(72) Inventor: **Iwatsuka, Nobuyoshi**
**6-12-1, Ayukawa-cho**
**Hitachi-shi, Ibaraki-ken(JP)**
Inventor: **Suzuki, Masanori**
**3-14-D-203, Higashitaga-cho**
Hitachi-shi Ibaraki-ken(JP)
Inventor: **Naito, Shinji**
**2-4-15-404, Ayukawa-cho**
**Hitachi-shi, Ibaraki-ken(JP)**
Inventor: **Ishii, Yoshikazu**
**6-12-1, Ayukawa-cho**
**Hitachi-shi, Ibaraki-ken(JP)**
Inventor: **Sawa, Toshiyuki**
**4-15-7-3, Suwa-cho**
**Hitachi-shi, Ibaraki-ken(JP)**

(74) Representative: **Patentanwälte Beetz sen. -**
**Beetz jun. Timpe - Siegfried -**
**Schmitt-Fumian- Mayr**
**Steinsdorfstrasse 10**
**W-8000 München 22(DE)**

(54) **Assembling a modular robot arm by means of a second robot arm.**

(57) The present invention provides a manipulator system and a method therefor which can assemble and disassemble a manipulator (2) from a remote place or autonomously by another manipulator (1).

The manipulator is constituted of attach- and detachable joint elements (6, 7, 8), and is provided with a control means (3) for attaching and detaching joint elements (6, 7, 8) by another manipulator (1).

Further, the attachment and detachment can be surely performed by providing a correction means (11, 14) of positional displacement of the attaching or detaching plane during attachment and detachment.

According to the above system, an exchange of the joint elements (6, 7, 8) is facilitated when the manipulator (2) breaks down at a site where easy access of craft persons is difficult and depending on work contents.

FIG. 1

# MANIPULATOR SYSTEM, MANIPULATOR ASSEMBLING AND DISASSEMBLING METHOD, MANIPULATOR, AND POSITION AND ATTITUDE DETECTION METHOD OF ATTACHING OR DETACHING PLANE

Background of the Invention

The present invention relates to a manipulator, and in particular, relates to a manipulator system suitable for realizing from a remote place change of a joint arrangement of a manipulator in accordance with work contents and exchange during failure of mechanical parts such as in a site where easy access of craft persons is difficult such as in a nuclear power plant and in space, and in a fully automated work.

Conventionally, in an arrangement of industrial robots, as disclosed in JP-A-59-1187 (1984), an end effector of a manipulator is constituted to be exchangeable by another manipulator. However, there was no idea that the manipulator itself performs attaching and detaching, assembling and disassembling of its joint elements. Further, conventionally, JP-A-60-34282 (1985) discloses a manipulator which can be divided into a plurality of joint elements.

In the explanation below, an arm indicates portions of a manipulator excluding an end effector for working, and is composed of some joint elements. The joint element, in many cases, includes a power shaft such as a rotational shaft, but may include a simple link without a power shaft.

Conventionally, during exchange of an end effector which has been carried out in connection with industrial robots, the top end of the robot had to be positioned exactly such as above the fitting precision of an attaching and detaching plane. Therefore, such measure was taken in that a storage position and attaching positions of the end effector were set beforehand at a precision which is more than the repeated positioning precision of the robot. Nevertheless, when assembling joint elements of a manipulator by using another manipulator, the manipulator coupling the joint elements has a low rigidity due to the coupling mechanism and is likely to bend. As a result, the position and attitude of a manipulator calculated by a position encoder on a joint differs much from the actual position and attitude. Therefore deviation of position and attitude between attaching or detaching planes of joint elements increased, and remote control or automatic assembly was difficult.

Conventionally, in the method of dividing the manipulator into a plurality of joint elements a craft person carries the joint elements to a job site and is required to install the joint elements to the manipulator. Consequently, there was a problem that this method could not be used in such a place where access to job site was difficult.

Summary of the Invention

Therefore, one object of the present invention is to provide a manipulator system which performs from a remote place change of a joint arrangement of a manipulator in accordance with work contents and exchange of a failed joint element. Another object of the present invention is to provide a method in which a manipulator is assembled or disassembled by another manipulator from a remote place or autonomously. A still another object of the present invention is to provide a structure of a joint element through which assembling and disassembling of a manipulator by using another manipulator are facilitated.

For achieving the first mentioned object, the manipulator system is composed of a plurality of manipulators including an attach- and detachable manipulator which couples an attach- and detachable joint element, and a control device which attaches and detaches the joint element by using another manipulator not including the joint element.

For achieving the second mentioned object, displacement of an attaching or detaching plane is corrected and thereafter attaching work is performed. Further, for achieving the second mentioned object, whether a manipulator to be assembled and an assembling manipulator are in a positional relationship, where a joint element is able to be attached and detached each other, is checked.

The third mentioned object of the present invention is to provide for a joint element, with a mechanism which facilitates to be held by a manipulator, means for canceling displacement of attaching or detaching plane, and an attaching and detaching guide mechanism or an attachment completion deteing means.

In a manipulator coupling an attach- and detachable joint element, since the coupling portion is flexible due to low rigidity, position and attitude of the attaching or detaching plane calculated based on signals from an encoder indicating positions of the respective joints is caused to deviate from the actual position and attitude. When the deviation is large, attachment and detachment, especially attachment becomes difficult. Accordingly, when the displacement of the attaching or detaching plane is corrected by means of such as an attaching and detaching guide mechanism which allows two attaching or detaching planes to

EP 0 441 397 A1

coincide with each other, the joint element can be surely attached and detached to a manipulator to be assembled. Further, when a joint element is held and attached or detached with an assembling manipulator, even if there is a slight displacement at the attaching or detaching plane, an additional force generated owing to the displacement can be canceled by a displacement canceling means, and attachment and detachment operations are further facilitated. In this instance, when the joint element is provided with a mechanism which facilitates to be held by the manipulator, control of the assembling manipulator becomes easy. Further, with the provision of the attachment completion detecting means, the attachment operation is ensured.

For performing the attachment and detachment operations as explained above, it is necessary that the manipulator to be assembled and the assembling manipulator are in a positional relationship where the joint element is able to be attached or detached each other. For example, assuming a case in which length of the manipulator to be assembled and that of the assembling manipulator are identical and when a joint element located at the top end of the manipulator to be assembled is to be attached or detached, and when the attitude of the manipulator to be assembled is upright, attaching or detaching of the joint element by the assembling manipulator is very difficult, and in some instances such cannot be carried out. Further, similarly, when the manipulator to be assembled and the assembling manipulator are located side by side, a joint element at the root side of the manipulator to be assembled may not be assembled. Therefore, it is advantageous to check the positional relationship between the assembling manipulator and the manipulator to be assembled, and to control the attitudes of the manipulators each other, or to change the position of the manipulator when either of the manipulators includes a shifting means.

Brief Description of the Drawings

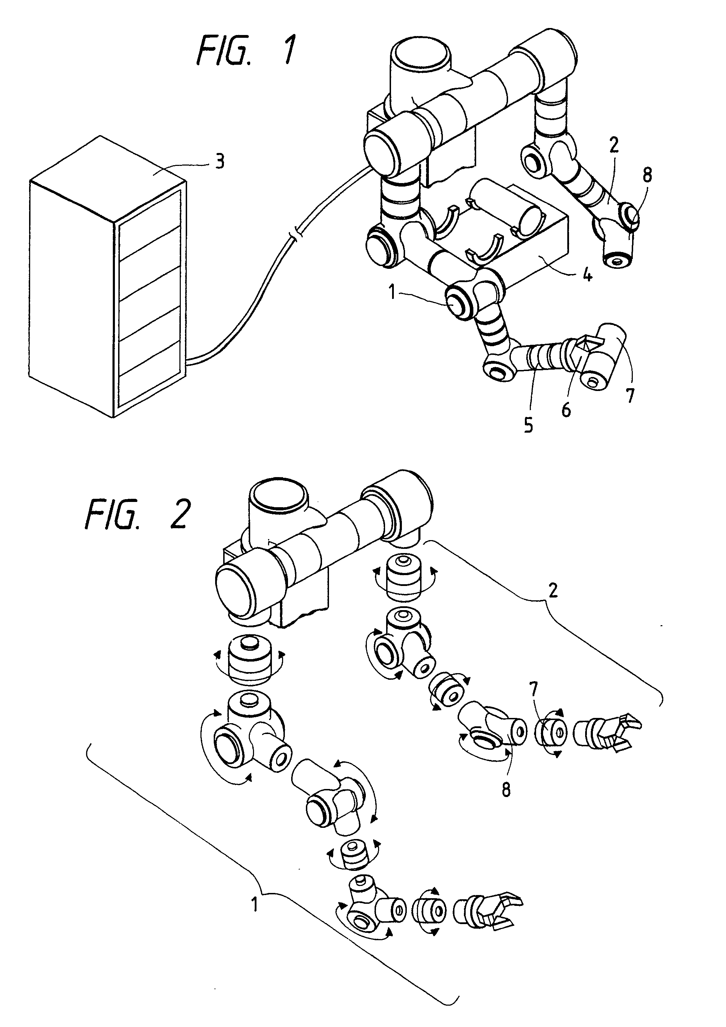

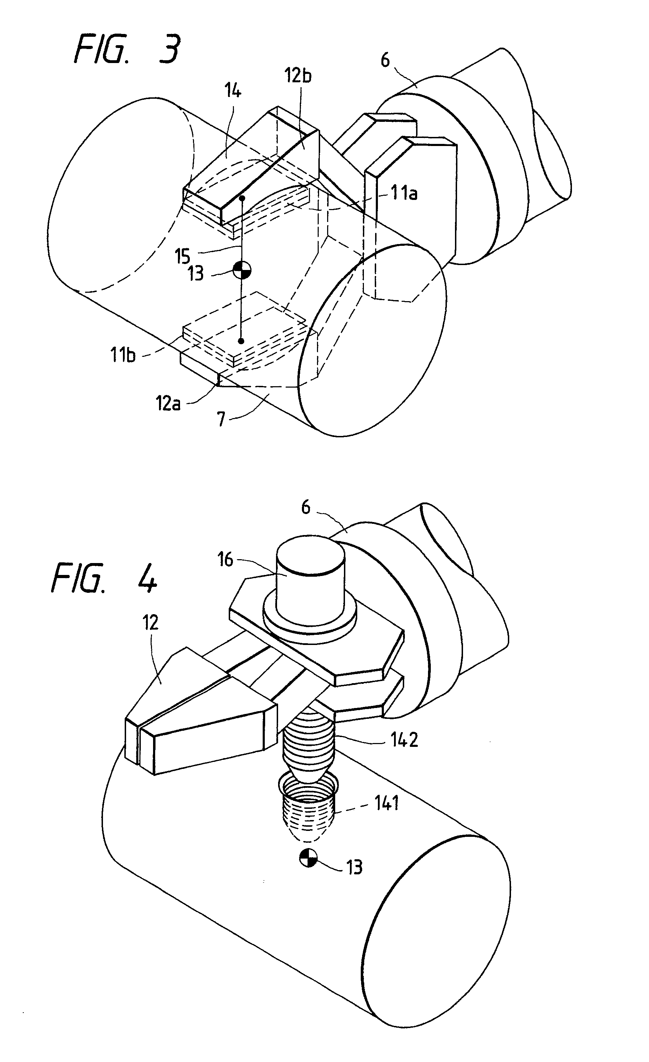

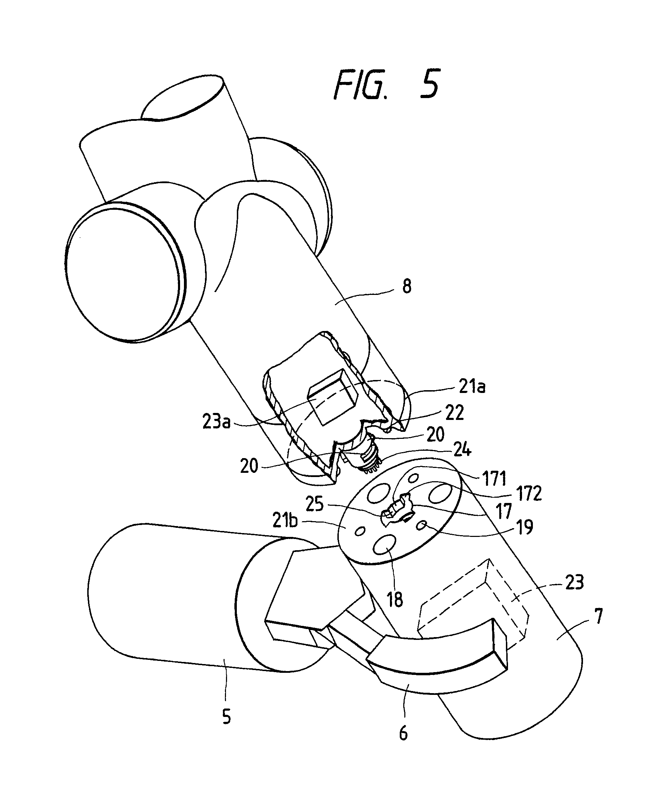

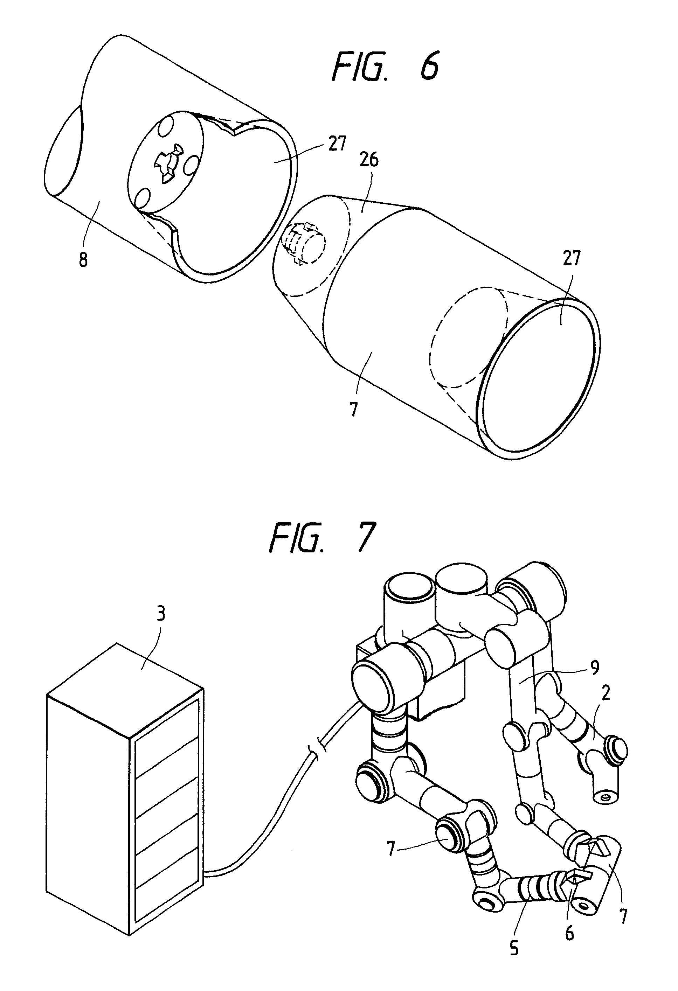

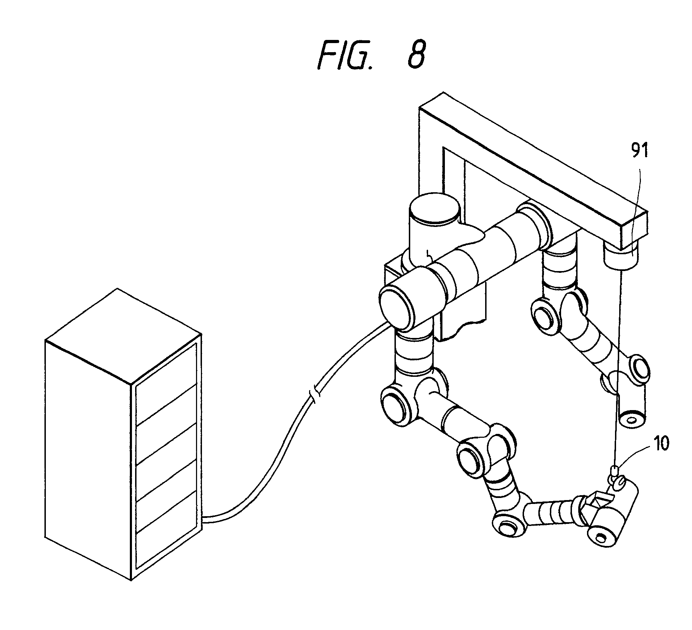

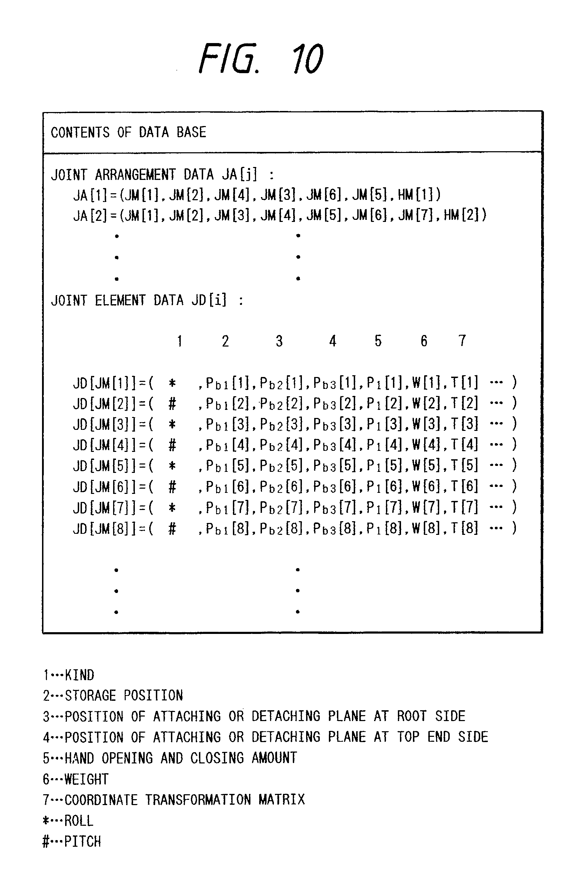

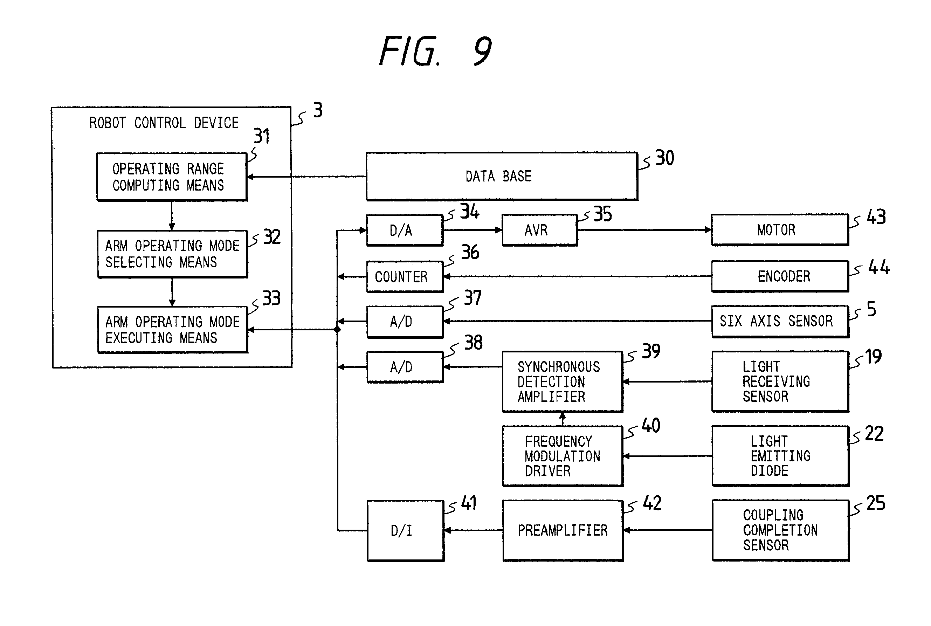

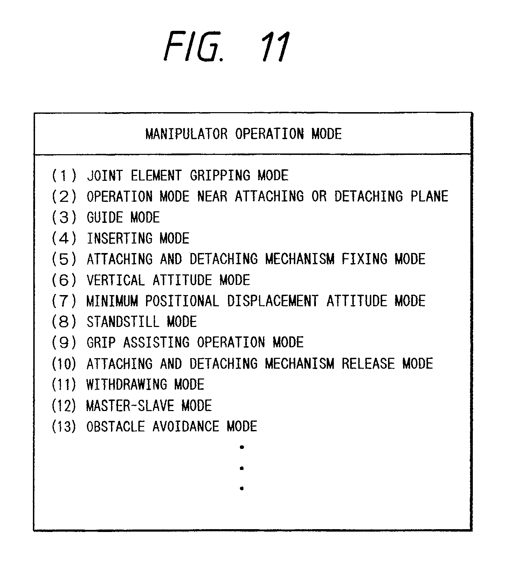

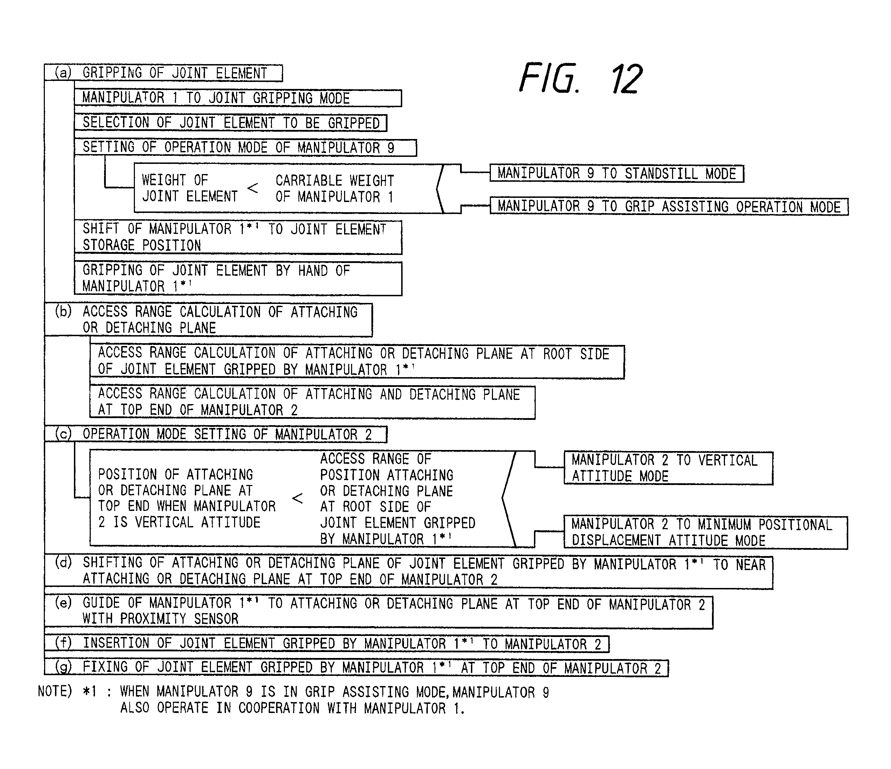

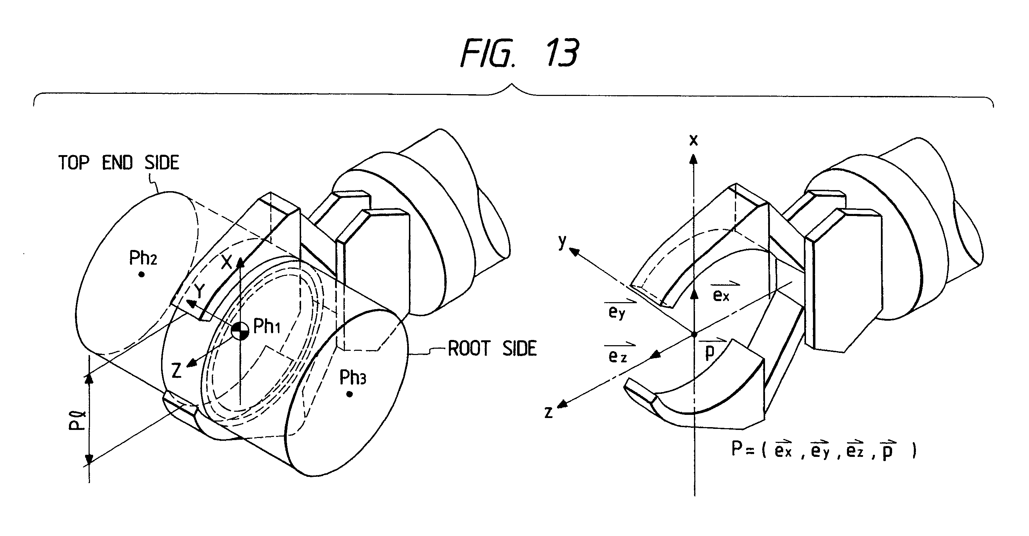

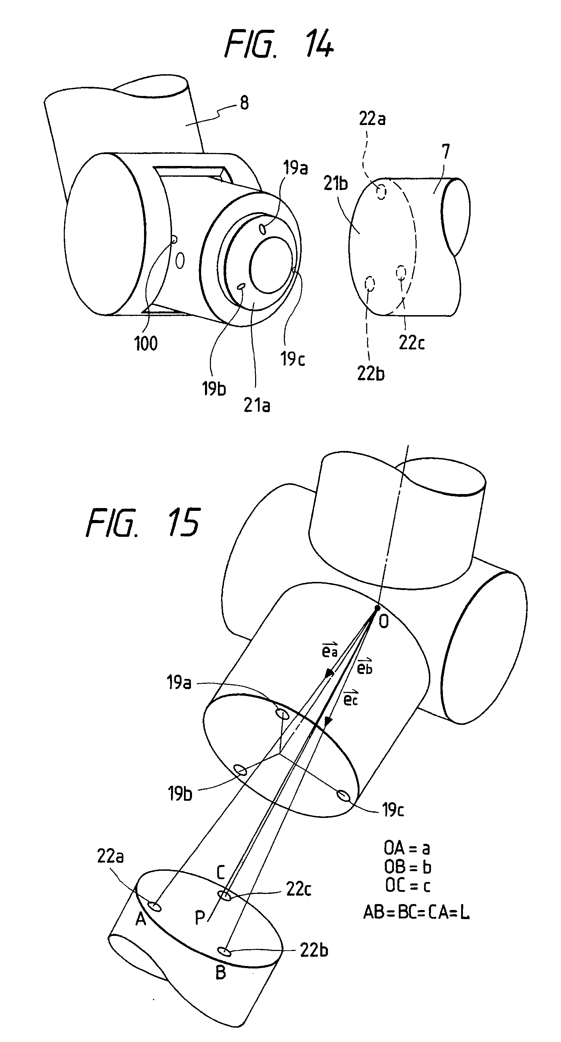

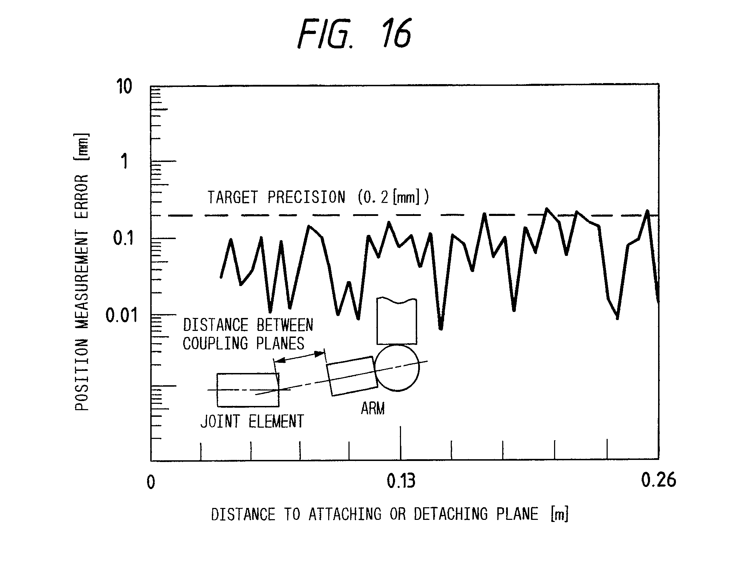

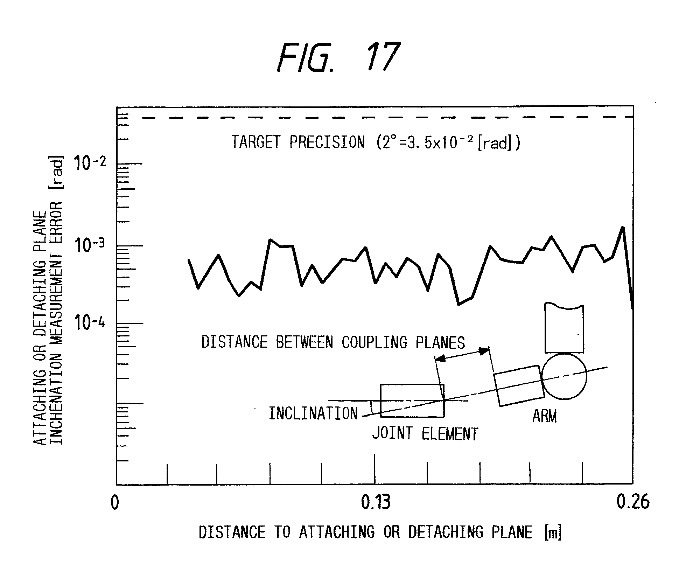

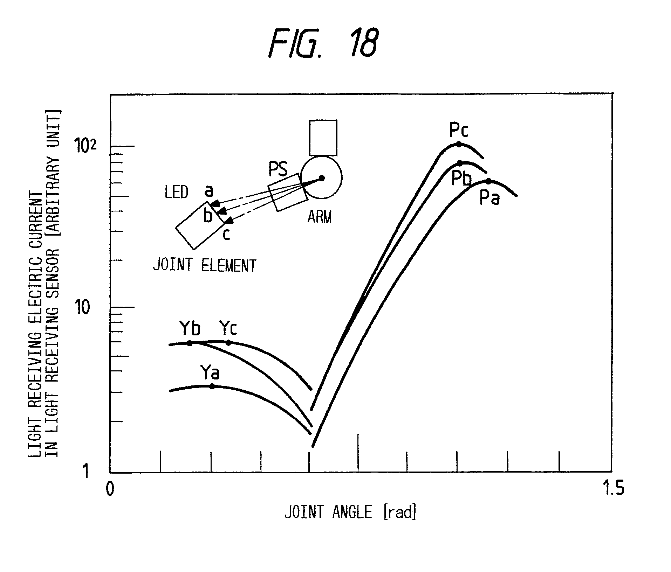

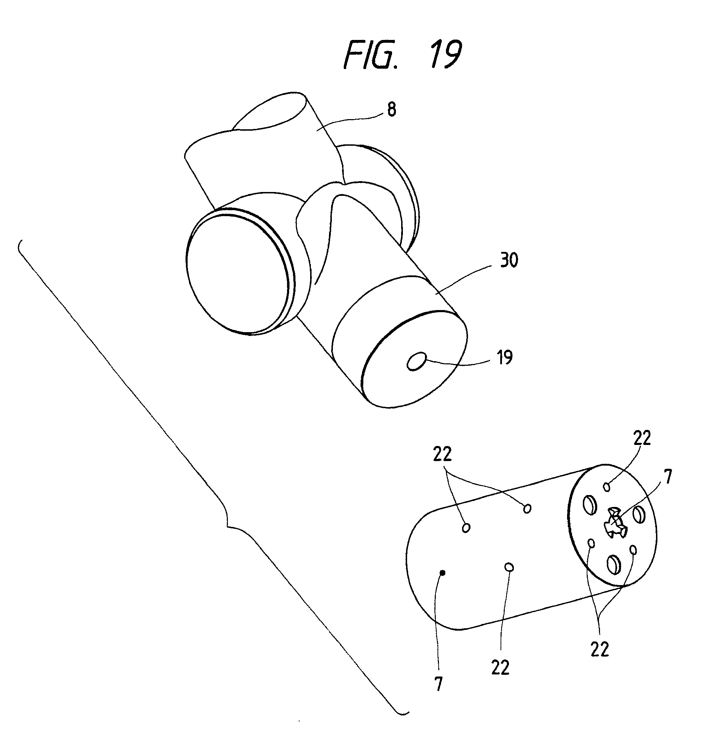

Fig.1 is a view showing an embodiment of a manipulator system when the present invention is applied to a double arm manipulator, Fig.2 is a view showing a disassembled state of the double arm manipulator in Fig.1 into a plurality of joint elements, Fig.3 is a view showing one embodiment of a mechanism which facilitates holding of a joint element and a displacement canceling means, Fig.4 is a view showing another embodiment of the mechanism which facilitates holding of a joint element and a structure of a hand used therefor, Fig.5 is a view showing one embodiment of an attaching and detaching mechanism of a joint element, an attaching and detaching guide mechanism, and an attachment completion detecting means, Fig.6 is a view showing another embodiment of the attaching and detaching guide mechanism, Fig.7 and Fig.8 are views showing a manipulator system of the present invention having a third manipulator for supporting mainly the weight of a joint element, Fig.9 is a diagram showing a control device, Fig.10 is a chart showing contents of a data base, Fig.11 is a chart showing an operating mode of a manipulator, Fig.12 is a flow chart showing a processing sequence when assembly and disassembly are performed autonomously, Fig.13 is a view showing position and attitude vectors, Fig.14 is a view showing an arrangement of light receiving sensors and light emitting diodes, Fig.15 is a view for explaining a calculation method of distance to an attaching or detaching plane and attitude of the attaching or detaching plane, Fig.16 is a graph showing calculation results of the position measurement precision with respect to distance to an attaching or detaching plane, Fig.17 is a graph showing calculation results of the inclination measurement precision with respect to distance to an attaching or detaching plane, Fig.18 is a graph showing relations between joint angle and light receiving electric current in a light receiving sensor during search of peak photo electric current, and Fig.19 is a view showing a joint element including an end effector for detecting position and attitude and a plurality of sets of light emitting diodes.

Detailed Description of the Preferred Embodiments

Fig.1 shows an embodiment in which the present invention is applied to a double arm manipulator. The present embodiment is constituted of two manipulators 1 and 2 in which joint elements are attach- and detachably mounted, a control unit 3, and an accommodating rack 4 for accommodating attach- and detachable joint elements and end effectors. Fig.2 shows a state in which the manipulators 1 and 2 are disassembled in every joint element. The respective joint elements include a joint rotatable into the arrow direction. The one which rotates like a joint element 7 of the manipulator 2 is called a roll axis, and the one which rotates up and down like a joint element 8 is called a pitch axis. In the respective joint elements such as a motor for driving respective joints and an encoder for detecting rotating angles of the joint are built-in. Further, weights of the respective joint elements are designed to be not more than the carriable weight of the manipulator 1 or 2, and the manipulators 1 and 2 are capable of gripping and attaching and detaching the joint elements of the other manipulator each other.

3

The manipulator 1 includes six joints, and a hand 6 is installed at the end of the manipulator through a six axis force sensor 5. The hand 6 includes two fingers, and the two fingers are constituted so as to open and close through their parallel movement. The opening and closing amount contains the amount which enables to grip a joint element having the maximum arm diameter in the manipulator 2.

Nextly, one embodiment of a mechanism provided in a joint element which facilitates to be held by a manipulator and a displacement canceling means is explained with reference to Fig.3. The joint element is formed with, as the mechanism facilitating to be held by the manipulator, a groove 14 having somewhat broader width than that of a finger 12 of the hand 6, and the grooves 14 are situated in positions where a center line 15 connecting between the centers of the fingers 12 gripping the joint element coincides with the center of gravity 13 of the joint element 7. Thus constituting, when the hand 6 grips the joint element 7, the joint element is prevented to rotate by its own weight, and the displacement in the attaching and detaching plane of the joint element generated by the rotational moment due to its own weight is suppressed.

Further, the groove 14 is provided with an elastic material 11 as the displacement canceling means, and is constituted so as to cancel the displacement when the hand 6 grips the joint element 7 and couples the joint element to another joint element. Further, the similar effect may be realized by providing an elastic material on the inner face of the fingers 12 of the hand 6 or by rendering the link portion of the opening and closing mechanism of the fingers into a flexible structure. Hardness of the elastic material is required not to be reached to the limit of elasticity when a gripping force not to drop off the joint element is applied. Further, an elastic material of a two layered structure having a hard outer layer and a soft inner layer may be employed.

Fig.4 shows another embodiment of a mechanism provided in a joint element which facilitates to be held by a manipulator, and a structure of a hand 6 used therefor. A female screw 141 is threaded on the joint element as the mechanism facilitating to be held. The threaded position of the female screw 141 is also desirable to be located so as to coincide with the position of the center of gravity of the joint element like in Fig.3. On the other hand, the hand 6 includes an end effector 12 for working and an male screw 142 which is an end effector for attaching and detaching. When a joint element is required to be held, a motor 16 for driving the male screw is controlled while pressing the male screw 142 to the female screw 141.

Nextly, by using Fig.5, one embodiment of an attaching and detaching mechanism, an attaching and detaching guide mechanism, and an attachment completion detecting means for the joint element is explained by taking the joint elements 7 and 8 in Fig.1 as an example. On one side of an attaching or detaching plane, a female type coupling part 17 of a bayonet system which constitutes the attaching and detaching mechanism, an electromagnet 18, and a light receiving sensor 19 which constitutes the attaching and detaching guide mechanism are installed, and on the other side, a male type coupling mechanism 20 of the bayonet system which constitutes the attaching and detaching mechanism, an attaching or detaching plane 21a of ferromagnetic material (iron, for example), and a light emitting diode 22 which constitutes the attaching and detaching guide mechanism are installed. 24 is an electrode pin such as for signal lines for control and for feed lines, and a power source for the light emitting diode 22 is incorporated in a circuit 23a mounted on a joint. Three pairs of the light receiving sensors 19 and the light emitting diodes 22 are disposed, and both of them are disposed on the respective attaching or detaching planes while being shifted by 120 degrees each other.

The attaching and detaching guide mechanism is moved close to the both of the attaching and detaching planes each other while positioning thereof (corresponding to a guide motion mode of autonomous control described below), after the corresponding attaching or detaching planes of two joint elements are guided close to some extent as shown in Fig.5. The attaching or detaching planes are provided with the mechanical coupling mechanisms 17 and 20 of bayonet system, and for performing a smooth mechanical coupling it is desirable to touch the both attaching and detaching planes while keeping the planes in parallel. For this purpose, at least three pairs of light emitting diodes and light receiving diodes are necessitated. Assuming a case of three pairs thereof, the light emitting intensities of the respective light emitting diodes are controlled to be maximized while maintaining receiving light intensities of the three light receiving diodes uniform. After the both attaching or detaching planes coming close, the male coupling part of the bayonet has to be inserted into a recessed part 172 of the female coupling part 17. Through the inserting operation an engagement condition is established. For this purpose, by using a six axis power sensor of the manipulator 1 gripping the joint element 7, the insertion is performed through the so-called fitting control.

After this fitting control, the joint element 7 is attached or detached by the following attaching and detaching mechanism in which a combined method of a mechanical bayonet method and an electrical electromagnet method is adopted. The female type coupling part 17 of the bayonet is composed of a protruding part 171 and a recessed part 172. After inserting the male type coupling part 20 along the

4

protruding part 171, and by rotating a roll axis of the manipulator 2 wherein the joint element 8 is attached, or rotating the joint element 7 with the manipulator 1, the male type coupling part 20 is locked in the protruding part 171 preventing withdrawal thereof. whether the male type coupling part 20 has been locked is detected by an attachment completion detecting means 25. In the present embodiment, the attachment completion detecting means is composed of an optical switch, and the locking is detected through light interception by the male type coupling part 20. After locking mechanically through the bayonet method, an electrical lock can also be added by actuating the electromagnet 18. The reason for the combined use of the mechanical lock and the electrical lock is as follows. The electrical lock including an electromagnet and a pole face is used for closely contacting the joint elements each other, and fixing the attaching or detaching planes so as not to displace the coupling part established by the bayonet method. On the other hand, the bayonet method is such a mechanism as to prevent dropping off the joint element by instantaneous separation of the magnetic pole faces due to an impact force which is caused when the manipulator hits obstacles therearound or work objects during operation of the manipulator which is constituted by coupling the joint elements. By the mutual complementing functions by the both methods, the respective joint elements are surely held.

In Fig.5, the optical system comprising the light emitting diodes and the light receiving sensors is used as the attaching and detaching guide mechanism, an acoustic system comprising supersonic wave transmitters and receivers may be used instead of the optical system.

Fig.6 shows another embodiment of an attaching and detaching guide mechanism of a mechanical type. In the present embodiment, the attaching and detaching guide mechanism is composed of a taper shaped guide part 26 formed at one end of a joint element 7, and a recess shaped guide part 27 formed at the other end. In the present embodiment, by using information from a force sensor of a manipulator 1 gripping the joint element 7, the tapered guide part 26 of the joint element 7 is approached to the attaching or detaching plane while slidingly fitting to the inner face of the recessed guide part 27 of a joint element 8.

By using the above described mechanism and control, the joint element 7 can be attached to the joint element 8. Accordingly, since the respective joint elements and the end effectors of the manipulator 2 are stored in the accommodating rack 4, such that when the manipulator 1 grips in order the joint elements used at the root side of the manipulator 2 and attaches thereof successively, the manipulator 2 can be assembled. These controls can be performed only by the control device 3. The controls can also be performed through master-slave control by making use of visual information such as via TV camera by an operator. At this instance, depending on attitudes of the manipulator 2, the manipulator 1 is prevented to attach the joint elements to the manipulator 2. Accordingly, before attaching and detaching the respective joint elements, whether such attitude of the manipulators 1 and 2 permitting mutual attaching and detaching operation can be realized is checked and if such attitude can not be realized, the attitude of the manipulator 2, for example, is changed, and thereafter attaching and detaching control is performed.

Hereinabove the attaching operation was mainly explained, however the detaching operation is substantially the same but excludes the guiding operation mode by the attaching and detaching mechanism.

Further, in the case of Fig.1, weight of the joint elements and the end effectors of the manipulator 2 is less than the weight which the manipulator 1 can carry, however when the manipulator 2 to be assembled contains a joint element having weight more than the carriable weight, the attaching and detaching operation is performed by making use of a third manipulator 9 and 91 which mainly supports articles having heavy weight as shown in Fig.7 and Fig.8.

Still further, the respective manipulators shown in Fig. 2, Fig.7 and Fig.8 are interconnected each other, but may be separated each other.

Lastly, a control method is explained in which the above assembling and disassembling control is performed.

The robot control device 3 is, as shown in Fig. 9, composed of an operating range computing means 31, a manipulator operating mode selecting means 32, and a manipulator operating mode executing means 33, and are connected in this order. The operating range computing means 31 and the manipulator operating mode selecting means 32 are connected with a data base 30. In the data base 30, as shown in Fig.10, data for operating a manipulator autonomously are stored. The operating range computing means 31 calculates a positional access range of the attaching or detaching plane at the root side on a joint element which is gripped by the manipulator 1 and positional access range of the attaching or detaching plane at the top end on the manipulator 2 to be assembled when the manipulator 1 gripping the joint element is operated within its operation range, of which details are described in (b). The manipulator operating mode selecting means 32, as shown in Fig.11, determines operating modes of a plurality of manipulators among a plurality of operating modes, and commands the decision to the manipulator operating mode executing means 33. The manipulator operating mode executing means 33 controls a motor which operates a joint of an arm through a D/A converter and an AVR (motor driver). Further, joint angle data of the arm are read from an encoder which detects turning angles of respective joint axes through a counter. Six sets of force information (respective three components of force and moment) at the top end of the arm are read from a six axis force sensor through an A/D converter. Further, the electric current of a light receiving sensor is read through an A/D converter and an amplifier including a synchronous detection circuit. A light emitting frequency of a light emitting diode is carried out through ON/OFF control of light emission by a frequency modulation type driver. An attachment completion sensor signal is read through a pre-amplifier and a digital input D/I.

Nextly, the assembling method is explained using the case of Fig.7 as an example in which a manipulator 1 assembles joint elements of a manipulator 2. A robot control device timely designates modes for the manipulators 1, 2 and 9 among manipulator operating modes shown in Fig.11 according to operation contents, reads out necessary data from a data base, and controls respective manipulators. Its processing sequence is broadly classified into (a) through (g) as shown in Fig.12. Hereinbelow, the details thereof are explained.

(a) Firstly, the robot control device designates the operation mode of the manipulator 1 to joint gripping mode. This mode is a mode in which the control device calculates a target position and attitude of an arm based on data in the data base and operates the arm into the target position and attitude. The position and attitude p referred to, as shown in Fig.13, are described as

$$P = (\vec{e}_x,$$

$$\vec{e}_y, \ \vec{e}_z, \ \vec{p})$$

based on unit vectors

$$: \vec{e}_x, \ \vec{e}_y \ \text{and} \ \vec{e}_z$$

of x, y and z axis, and positional vector

$$\vec{p}.$$

Hereinbelow, for simplification sake, the position and attitude inclusively are simply referred to as position unless otherwise specified. The robot control device reads out a method of constructing the manipulator 2 from the data base. This sequence is explained in more detail below. The robot control device reads out a data JA[j] for a joint arrangement of the manipulator 2. For example, data for j1-th manipulator joint arrangement corresponds to JA[j1], and the joint element number i of the second joint in this manipulator is i = JM[J2]. For achieving the joint arrangement of the arm, data on a joint element to be coupled are read out from the data base according to the joint number i. As shown in Fig.10, these data are composed of such as kind of the joint element (such as a pitch joint, a roll joint), storage position $P_{h1}$ of the joint element, positions of an attaching or detaching plane of the joint element at the root side and top end side $p_{h2}$ and $P_{h3}$, hand opening and closing amount $P_f$ during gripping of the joint element, weight W, and coordinate transformation matrix T. For example, in the case of joint element number i = JM[5], above data are as follows,

JD[JM[5]] = (roll, $P_{h1}[5]$, $P_{h2}[5]$, $P_{h3}[5]$, $P_f[5]$, W[5], T[5], ...).

Hereinbelow, addition of suffixes to the symbols are omitted for simplification sake. The robot control device judges whether the weight of the joint element now to be gripped is not more than the carriable weight W by the manipulator 1, and when the weight is not more than the carriable weight the manipulator 9 is set in a standstill mode. When the weight is not less than the carriable weight, the manipulator 9 is set in a joint gripping mode. In this mode the manipulator 1 performs positioning, and operates in cooperation with the manipulator 9 by supporting a part of the weight of the joint element which the manipulator 9 grips. Here, the details on the case where the weight is not more than the carriable weight by the manipulator 1 are explained. Now, the storage position $P_{h1}$ of the joint element intended to be coupled is described by a world coordinate system (a coordinate system common to the three manipulators), and positions of the attaching or detaching plane at the root side and top end side $P_{h2}$ and $P_{h3}$ and opening and closing amount $P_f$ of the hand fingers when gripping the joint element are described by a local coordinate system of the joint element (a coordinate system which is inherently assigned to such as respective joint elements). For example, as shown in Fig.13, the storage position of the joint element $P_{h1}$ is in the position of the center of gravity of the joint element, and the storage attitude is in a perpendicular direction to Y axis when assuming the center line of the joint element as Y axis. The opening and closing amount of the hand fingers $P_f$ is the width which the fingers of the joint element can grip.

The robot control device 3 calculates the present position $P_h$ of the hand gripping center of the manipulator 1 by using coordinate transformation matrix $A_a$ for transforming the local coordinate system to the world coordinate system, its Jacobian matrix $J_a$, and the present joint angles from $\theta_1$ to $\theta_6$ of the manipulator. By using the coordinate transformation matrix $A_a$, difference of distance $\Delta P_a$ between the present position $P_h$ of the hand gripping center and the storage position of such as the joint element is calculated according to the following formula.

$$\Delta P_a = P_{xh} - P_a \cdot A_a$$

From the difference of the distance, target angular velocities of the respective joints $\omega = (\theta_1 ... \theta_6)$ are calculated by the following formula.

$$\omega = \Delta P_a^t \cdot J_a^{-1}$$

The target angular velocities $\omega$ are fed to an AVR (voltage control type amplifier) via the D/A until the following condition is satisfied. The AVR controls a rotational angular velocity of a motor for operating the joint so as to reach the target angular velocity. As a result, the operation is continued until the hand gripping center of the manipulator 1 approaches near the storage position of the joint element, namely the positional error becomes not more than $\Delta_1$.

$$\Delta P_a < \Delta_1$$

Here, although there is an uncertain error such as a measuring error of data for the storage position, the positional error $\Delta_1$ is set at not more than such a value at which the hand can surely grip the joint element. Thereafter, the fingers of the hand are closed so as to render the opening and closing amount of the hand to be $P_f$, and to grip the joint element.

(b) Nextly, the robot control device 3 calculates reach range in position of the attaching or detaching plane at the root side on a joint element which is gripped by the manipulator 1 when the manipulator 1 is operated, and reach range with regard to the position of the attaching or detaching plane at the top end on the manipulator 2 when the manipulator 2 is operated. These calculations are performed, for example, via the following sequence. The position $P_{h3}$ of the attaching or detaching plane (the attaching or detaching plane to be coupled to the manipulator 2) at the root side on a joint element which is gripped by the manipulator 1 is read out from the data base. Further, the position $P_{h2}$ of the attaching or detaching plane at the top end side of the joint element locating at the most top end in the manipulator 2 is read out from the data base. Since these data are described by the local coordinate systems of joint axes of the respective joint elements, the data have to be transformed into those in the world coordinate system for checking whether the both coinside three-dimensionally. These coordinate transformation matrices $A_a$ and $A_b$ depend upon the joint angles of respective arms. Accessible position ranges of the respective attaching or detaching plane are calculated by obtaining a coordinate transformation matrices $A_a$ and $A_b$ for all joint angle combinations within the operating range, and by calculating $A_a \cdot P_{h3}$ and $A_b \cdot P_{h2}$ which are the values of the positions of the attaching or detaching planes transformed into the world coordinate system of the attaching or detaching plane. Further, the calculation may be performed before execution of the assembly sequence and be stored in the data base. Still further, by limiting region where the attaching or detaching planes of the both manipulators coincide to a specified range, only the values $A_a \cdot P_{h3}$ and $A_b \cdot P_{h2}$ corresponding to the combinations of the joint angles of the manipulators coming within this specified range may be calculated.

(c) Next, the robot control device 3 checks whether an attaching or detaching plane of a joint element which is gripped by the manipulator 1 is capable of reaching to an attaching or detaching plane at the top end of the manipulator 2 by operating the manipulator 1 under the condition where the manipulator 2 is in vertical attitude (the attitude where the arm is in perpendicular condition). When it is possible to reach, the manipulator 2 is set in a vertical attitude operating mode. In this mode, all the manipulators are positioned so as to be in vertical conditions. When it is impossible to reach there, the manipulator 2 is set in a minimum positional displacement attitude mode. In this mode, the operating range where the manipulator 1 can reach is obtained from the operating range of the manipulator 2, and the attitude is calculated in which the tare weight moment applied on a joint axis of the manipulator 2 is rendered minimum within the range, and the manipulator 2 is positioned in that attitude.

By such positioning, the top end position of the arm can be positioned so that the displacement at the top end of the manipulator caused by the tare weight of the joint element (the difference between the position calculated by an encoder and the actual position) is decreased.

(d) Next, the robot control device 3 designates an operating mode near the attaching or detaching plane of the manipulator 1. In this mode, the attaching or detaching plane at the root side on a joint element which is gripped by the manipulator 1 is positioned near the attaching or detaching plane at the most top end on the manipulator 2. Namely, coordinate transformation matrices $A_a$ and $A_b$ in a present position of the manipulators 1 and 2 are calculated, and the position $P_{h3} \cdot A_a$ of attaching or detaching plane at the root side on the joint element which the manipulator 1 grips and the position $P_{h2} \cdot A_b$ of the attaching or detaching plane at the most top end on the manipulator 2 are calculated. Next, the manipulator is operated in the same sequence as above so that the difference between the both $\Delta_1 = P_{h2} \cdot A_b - P_{h3} \cdot A_a$ reduces to not more than a predetermined value $\Delta_2$. Here, the predetermined value $\Delta_2$ is set at a level where the irradiating light of the light emitting diode can be sufficiently detected by the light receiving sensor shown in Fig.5.

(e) Next, the robot control device 3 sets an operating mode of the manipulator 1 in a guide mode. In this mode, the distance to an attaching or detaching plane of the manipulator 2 is measured by detecting the light of the light emitting diode 22 with the light receiving sensor 19, and the manipulator 1 is operated toward the manipulator 2. In an example of specific methods, the manipulators 1 and 2 are operated to a direction in which electric currents $I_i$ ($i = 1$ through 3) of the respective light receiving sensors 19 become maximum and are guided so that the two attaching or detaching planes face each other rightly. For this purpose the manipulators 1 and 2 are controlled in such a manner that the electric current $I_i$ of the light receiving sensor 19 and data F of the six axis force sensor 5 are sequentially sampled, and the two arms are gradually actuated to a direction in which electric current of the light receiving sensor is maximized, and these operations are continued until the attaching or detaching plane of the manipulator 1 touches the attaching or detaching plane of the manipulator 2. This touch is detected when the data F of the six axis force sensor 5 exceeds a force detection error $\Delta F$.

(f) Next, the robot control device 3 sets an operating mode of the manipulator 1 in an inserting operation mode. In this mode, the manipulator 1 inserts a coupling mechanism of a joint element which is gripped thereby into an attaching and detaching mechanism of a joint element at the top end on the manipulator 2. Namely, a target value of the six axis force sensor value $F_R$ is set as

$$FR = (0, 0, \Delta F_z, \Delta M_x, \Delta M_y, 0),$$

and the manipulator 1 is position-controlled to the target value with the arm being force-controlled. Further, $\Delta F_z, \Delta M_x$ and $\Delta M_y$ are set beforehand at the force required for fitting the attaching and detaching mechanism. Completion of the mode is judged when an electric current value of the light receiving sensor 19 exceeds a predetermined value. Still further, the judgment may be performed by mounting a contact sensor for ascertaining attaching and detaching on an attaching or detaching plane and by detecting an ON signal of the sensor.

Next, the robot control device 3 sets an operation mode of the manipulator 1 in an attaching and detaching mechanism fixing mode. In this mode, the manipulator 1 rotates a wrist roll joint, and fixes a joint element which is gripped by the manipulator to the top end of the manipulator 2 with the bayonet method. At this instance, the coupling completion of the bayonet method is ascertained by a signal from an attachment completion sensor 25. Further, instead of the attachment completion sensor, detection may be performed when a torque value of the six axis force sensor exceeds a predetermined value.

By repeating the above series operations from (a) to (g) for every joint element, the manipulator 2 is assembled. Further, when disassembling the manipulator, a series of work is performed in which firstly the hand of the manipulator 1 is set in a detachment use joint element gripping mode for gripping the end effector at the top end of the manipulator 2, the operating mode (g) is set in detachment mode of the attaching and detaching mechanism, fixing of the attaching and detaching mechanism is released, the joint element is withdrawn through a withdrawing mode, and the joint elements are returned in the storage positions, the detail explanation thereof is omitted because the works are similar to those during assembling the arms.

After completion of the assembly of the manipulator 2, the manipulators 1 and 2 are switched to the master-slave mode for enabling a remote controlled works.

In the above series of controls, the simple installation of the light emitting diodes and the light receiving sensors on the attaching or detaching planes as the guide mechanism as shown in Fig.5 necessitates controlling the two manipulators to control the two attaching or detaching planes so as to face each other rightly. However, in this instance, there are so many degrees of freedom to be controlled that the control cannot be necessarily performed in a short time. Hereinbelow, a method is explained which ensures the control in a short time in the guide mode.

Firstly, in Fig. 1, a case is assumed in which the manipulator 1 gripping the joint element 7 to be attached or detached is fixed and only the manipulator 2 is controlled. As shown in Fig.14, at least three of light receiving sensors 19 are installed on an attaching or detaching plane 21a of a joint element 8 (operation side) located at the top end of the manipulator 2 and of light emitting diodes 22 on an attaching or detaching plane 21b of a joint element 7 (fixed side) gripped by the manipulator 1, respectively (Fig.14 shows a case wherein the minimum number of three light receiving sensors and light emitting diodes are used). Three light receiving sensors 19a, 19b and 19c on the plane of the attaching or detaching plane 21a, as shown in Fig.14, are located on a spherical surface around a center point 100 of the rotational axis during the peak current search and are arranged so as to form a regular triangle. On the other hand, on the attaching or detaching plane 21b, three light emitting diodes 22a, 22b and 22c of a diffusion type having no directional dependency on light emitting angle are arranged so as to form a regular triangle. Here, what the light receiving sensors being located on the spherical surface means that the light receiving sensors are arranged so that perpendicular lines drawn from the center point 100 to the respective light receiving planes of the light receiving sensors coincide with the central points of the respective light receiving planes of the light receiving sensors. The reason for this arrangement is to locate the rotational center point 100, the center point of the light receiving plane of the light receiving sensor and the center point of the light emission of the light emitting diode on a straight line when light receiving electric current in the light receiving sensor becomes maximum by operating the joint element on the side where the light receiving sensors are installed. Consequently, a direction vector $e_a$, for example, can be determined which directs from a center point 100 to a light emitting diode 22a as shown in Fig.15. Three direction vectors $e_a, e_b$ and $e_c$ are obtained by performing this search between the light emitting diodes and the light receiving sensors which are in the corresponding relationship respectively. In this instance, assuming that the distance between two light emitting diodes is L and the distances between the center point 100 and the respective light emitting diodes are a, b and c, the following formulas are established from the geometric relation of the three triangles formed by the center point 100 and two light emitting diodes

$$a^2 - 2h_{ab} \cdot ab + b^2 = L^2$$
$$b^2 - 2h_{bc} \cdot bc + c^2 = L^2 \quad \ldots (1)$$
$$c^2 - 2h_{ca} \cdot ca + a^2 = L^2$$

where

$h_{ab} = \cos\theta_{ab}$

$\theta_{ab}$ is the angle between vectors OA and OB

$h_{bc} = \cos\theta_{bc}$

$\theta_{bc}$ is the angle between vectors OB and OC

$h_{ca} = \cos\theta_{ca}$

$\theta ca$ is the angle between vectors OC and OA

Equations (1) can be solved only when the light emitting diodes are arranged in a triangle shape, that is to say, the distances between two light emitting diodes are $L_{ab} = L_{bc} = L_{ca} = L$. This solution is expressed by equations (2).

9

$$a = L\sqrt{\{3/(1 - h_{bc} \cdot X - h_{ca} \cdot Y + h_{ab} \cdot XY/2)\}}$$

$$b = a \cdot X \qquad \qquad \dots (2)$$

$$c = a \cdot Y$$

where X is the solution of the following equations of forth degrees

$$(1 - 4h_{ab}{}^2)X^4 + 4h_{ab}(h_{ca} + 2h_{ca}h_{bc})X^3$$
$$-2(8h_{ab}h_{bc}h_{ca} + 1)X^2 + 4h_{ca}(h_{ab} + 2h_{ca}h_{bc}) + 1 - 4h_{bc}{}^2 = 0$$
$$Y = (1 - X^2)/(h_{ca} - h_{ab}X)/2$$

However, when the denominator of Y $(h_{ca}-h_{ab}X) = 0$, the solution is expressed by equation (3).

$$a = L\sqrt{\{3/(1 - h_{bc}/2)\}}$$

$$b = a \cdot \{h_{ca} \pm \sqrt{(h_{ca}{}^2 + 1 - 2h_{bc})}\} \qquad \qquad \dots (3)$$

$$c = a$$

Vectors OP, PA, PB and PC, as shown in Fig.15, can be obtained from vectors OA, OB and OC obtained from these a, b and c, and the position and attitude of a joint element 7 corresponding to a joint element 8 can be obtained. Accordingly, the attaching or detaching plane on the joint element 8 can be combined with the one on the joint element 7 by controlling a manipulator 2. When the two attaching or detaching planes cannot be combined because of insufficient degree of freedom of the manipulator 2, after controlling the attitude of a manipulator 1 according to the above obtained information the above operations again be performed. Fig.16 and Fig.17 show position measurement errors and attaching or detaching plane inclination measurement errors with respect to the distance between the two attaching or detaching planes, respectively. Further, Fig.18 shows a variation of light receiving electric current in the light receiving sensor with respect to the operation angle of the joint element 8 during the peak current search.

Hereinabove, the case was explained in which the manipulator 2 was controlled while the manipulator 1 fixed, however a case is also possible in which the manipulator 1 is controlled while the manipulator 2 fixed. In the latter case, the light receiving sensors 19 are installed on the joint element 7, the light emitting diodes on the joint element 8, and the position and attitude of the joint element 8 with respect to the joint element 7 can also be obtained in the same manner as in the above when the joint element 7 is moved by the manipulator 1. However, a difference from the above example is that the operational center point of the manipulator 1, as shown in Fig.5, is located not in the joint element 7 but in the joint element 5. Accordingly, it is necessary for the calculation to convert the rotational center point of the joint element 5 into the rotational center point of the joint element 7.

Further, in Fig.14, the light receiving sensors were located on the spherical surface around the center point 100 of the rotational axis during the peak current search, however the center point of the spherical surface may be located on the straight line connecting the geometric center of the three light receiving sensors and the center point 100, because a direction vector obtained when electric current in the light receiving sensor is maximum can be converted to a direction vector from the center point 100.

Further, in the above constitution, inside all of the joint elements, circuits 23a installed in the joints controlling the lighting of the light emitting diodes 22 and circuits 23b installed in the joint controlling the signals from the light receiving sensors 19 are installed. These light emitting diodes 22 emit light in pulse like manner and are adapted to change the light emitting intervals with the circuits 23a installed in the joint. Further, the joint 23b installed in the joint incorporates a circuit for processing light receiving electric current in the light receiving sensor only when one predetermined light emitting diode 22a emits light in synchronism with light emitting periods of the light emitting diodes 22. By this function only the light intensity of an object light emitting diode 22 can be received without being affected by disturbances thereround in spite of existence of a plurality of the light emitting diodes 22. Such is explained with a specific example wherein the light from the light emitting diode 22a is received. Since the light emitting diode 22a repeats light-on and off periodically, the circuit 23b installed in the joint separately and sequentially reads the light receiving electric current $I_{on}$ in the light receiving sensor while the light emitting diode 22a is on and the light receiving electric current $I_{off}$ in the light receiving sensor while all of the light emitting diodes 22 are off, integrates the same and stores the integration results, and outputs the difference between the integrated values of $I_{on}$ and $I_{off}$. Further, while defining the light receiving electric current in the light receiving sensor when the light emitting diode 22a is off as $I_{off}$, an integrated value of light receiving electric current in the light receiving sensors when the light emitting diodes 22 are off may be read and stored beforehand. Further, the reason why the light receiving electric current of the light receiving sensors is integrated is that the light from the light emitting diode entering the light receiving sensor is generally weak and the response of the light receiving sensor shows about several nA in many cases. Accordingly, a high gain amplifier is necessary to detect this weak electric current and further influence such as by drift in the circuit is significant which disturbs the detection of the light receiving electric current, for overcoming this problem, it is very effective to switch the light-on time of the light emitting diode in a short time, and to execute the offset calculation of above explained ($I_{on}-I_{off}$).Further, although a linear amplifier is usually used for a pre-amplifier for the light receiving sensor in a positional displacement processing circuit, a log-amplifier may also be used therefor. Thereby, saturation of the amplifier is eliminated and dynamic range provided for the light receiving sensor can be maintained.

Fig.19 shows another embodiment of the attaching and detaching mechanism and the control method therefor than that shown in Fig.14 to Fig.18. An end effector 30 for measuring position and attitude is installed on the top end of a joint element 8. One photo sensor is installed on the top end of the end effector 30 for measuring position and attitude and inside thereof circuit 23b installed in the joint is installed. Two sets of the light emitting diode groups each composed of three light emitting diodes and forming a regular triangle are installed in a joint element 7. The joint element 8 for the peak current search operates in accordance with the method explained in detail in connection with the above first embodiment, in that, while receiving the light from the light emitting diodes 22 and performing the peak current search of the light receiving electric current, the direction vectors of the three light emitting diodes forming a set are measured, the positions of the light emitting diodes are determined, and the correct position of the joint element mechanism is calculated. A different point of the present embodiment from the previous embodiment is that the lighting times of all the six light emitting diodes are made different from each other and the respective received light currents are discriminated and stored in synchronism with the respective timings by the circuit 23b mounted on the joint. The present embodiment has an advantage that the required processing can be fulfilled by only one light receiving sensor 19. In further embodiment, a set of the light emitting diodes arranged on a regular triangle are installed beforehand on a plane of a body to be measured, and position of the moving body is measured by using the joint element 8 and the end effector 30 for measuring position and attitude shown in Fig.19. According to the present embodiment, the position and attitude of the body can be easily measured even if this body moves.

According to the present invention as explained above, the manipulator system is provided which enables from a remote place change of a joint arrangement of a manipulator in accordance with work contents and exchange of failed joint elements. Further, a method is provided in which a manipulator can be assembled or disassembled from a remote place or autonomously by another manipulator. Still further, a joint element is provided which facilitates assembling and disassembling of a manipulator by another manipulator.

## Claims

1. A manipulator system comprising a plurality of manipulators (1, 2) in which at least one of the manipulators (1, 2) is composed of a coupling structure of an attach- and detachable joint element (7, 8), and a control device (3) for attaching and detaching said attach- and detachable joint element (7, 8) of the manipulator with another manipulator which is not an attaching and detaching object.

2. A manipulator system comprising a manipulator (2) to be assembled composed of an attach- and detachable joint element (7, 8) or an end effector (6), an assembling manipulator (1) for assembling or disassembling said manipulator (2) to be assembled, and means (3) for controlling position and attitude of said manipulators (1, 2) to render said attaching and detaching element attach-and detachable.

3. A manipulator system comprising a plurality of manipulators (1, 2) including an attach- and detachable manipulator (2) provided with at least one attaching and detaching element in the form of a joint element (7, 8) or an end effector (6), and means (3) for controlling position and attitude of said attach- and detachable manipulator (2) to render said attaching and detaching element (6, 7, 8) attach- and detachable.

4. A manipulator system comprising a manipulator (2) to be assembled including an attach- and detachable joint element (7, 8) or an end effector (6), an assembling manipulator (1) for assembling or disassembling said manipulator (2) to be assembled, and means (3) for shifting said manipulator (2) to render said attaching and detaching element (6, 7, 8) attach- and detachable.

5. A manipulator system comprising a plurality of manipulators (1, 2) including an attach- and detachable manipulator (2) in which at least one of a joint element (7, 8) or an end effector (6) is provided with an attaching and detaching element, characterized in that, said attaching and detaching element (6, 7, 8) is provided with an attaching and detaching guide mechanism (11, 14) for correcting displacement during attaching and detaching.

6. A manipulator system comprising a manipulator (2) including an attach- and detachable joint element (7, 8) or an attaching and detaching element of an end effector (6), characterized in that, said attaching and detaching element (6, 7, 8) is provided with a mechanism (11, 14) facilitating to be held by an end effector (6) of another manipulator (1) to which said attaching and detaching element is attached and detached.

7. A manipulator system according to claim 6, characterized in that a holding part (14) is provided with a displacement cancelling means (11) for cancelling displacement during attaching and detaching.

8. A manipulator system according to claim 6, characterized in that said end effector (6) is provided with a displacement cancelling means (12, 12a, 12b) for cancelling displacement during attaching and detaching.

9. A manipulator system according to claim 6, characterized in that a holding part (14) is provided near the center of gravity (13) of said attaching and detaching element (6, 7, 8).

10. A manipulator system comprising an attach- and detachable manipulator (2) including an attach- and detachable joint element (7, 8) or an attaching and detaching element of an end effector (6), a manipulator (9, 91) for mainly holding the weight of said attaching and detaching element (6, 7, 8), and a manipulator (1) for mainly performing attaching and detaching work.

11. A method for assembling and disassembling an attach- and detachable manipulator (2) including an attach- and detachable joint element (7, 8) or an attaching and detaching element of an end effector (6) by means of another manipulator (1),

the method for assembling and disassembling a manipulator being characterized by comprising the steps of checking whether said manipulator (2) is in a positional relationship where said attaching and detaching element (6, 7, 8) is attach- and detachable, and controlling position and attitude of said manipulator (2) based upon the checked result.

12. A method for assembling and disassembling an attach- and detachable manipulator (2) including an attach-and detachable joint element (7, 8) or an attaching and detaching element of an end effector (6) by means of another manipulator (1),

the method for assembling and disassembling a manipulator being characterized by comprising the steps of determining position and attitude of said attach- and detachable manipulator (2) so as to decrease deviation between actual position and attitude in an attaching or detaching plane of said attach- and detachable manipulator (2) and position and attitude thereof obtained from a joint angle, and thereafter attaching and detaching said attaching and detaching element (6, 7, 8).

13. A method for assembling and disassembling an attach- and detachable manipulator (2) including an attach-and detachable joint element (7, 8) or an attaching and detaching element of an end effector (6) by means of another manipulator (1),

the method for assembling and disassembling a manipulator being characterized by comprising the steps of directing the attaching or detaching plane of said attach- and detachable manipulator (2) toward vertical direction, and thereafter attaching and detaching said attaching and detaching elements (6, 7, 8).

14. A method for assembling and disassembling an attach- and detachable manipulator (2) including an attach-and detachable joint element (7, 8) or an attaching and detaching element of an end effector (6) by means of another manipulator (1),

the method for assembling and disassembling a manipulator being characterized by comprising the steps of determining position and attitude of the attach- and detachable manipulator (2) so as to decrease rotational moment based on the tare weight of the attaching and detaching element (6, 7, 8) of the attach- and detachable manipulator (2) within a range being capable of attaching and detaching said attach- and detachable elements (6, 7, 8) by means of the other manipulator (1), and thereafter attaching and detaching the same.

15. A method for assembling an attach- and detachable manipulator (2) including an attach- and detachable joint element (7, 8) or an attaching and detaching element of an end effector (6) by means of another manipulator (1) having a force sensor (5) at its top end,

the method for assembling a manipulator being characterized by comprising the steps of gripping an attaching and detaching element (6, 7, 8) for attachment by means of the other manipulator (1), causing an attaching or detaching plane of said attaching element (6, 7, 8) to approach to an attaching or detaching plane of the attach- and detachable manipulator (2) thereafter attaching the attaching and detaching element (6, 7, 8) based upon the information of said force sensor (5), and fitting the attaching or detaching plane by an attaching and detaching mechanism (17, 20) on the attaching or detaching plane.

16. A method for assembling an attach- and detachable manipulator (2) including an attach- and detachable joint element (7, 8) or an attaching and detaching element of an end effector (6) by means of another manipulator (1) having a force sensor (5) at its top end,

the method for assembling a manipulator being characterized by comprising the steps of gripping the attaching and detaching element (6, 7, 8) for attachment by means of the other manipulator (1), causing an attaching or detaching plane of said attaching element (6, 7, 8) to approach to an attaching or detaching plane of the attach- and detachable manipulator (2), thereafter attaching the attaching and detaching element (6, 7, 8) based upon the information of said force sensor (5), correcting the displacement between the both attaching or detaching planes, and fixing the attaching or detaching planes by an attaching and detaching mechanism (17, 20) on the attaching or detaching planes.

17. A method for assembling an attach- and detachable manipulator (2) including an attach- and detachable joint element (7, 8) or an attaching and detaching element of an end effector (6) by means of another manipulator (1) having a force sensor (5) at its top end,

the method for disassembling a manipulator being characterized by comprising the steps of gripping the attaching and detaching element (6, 7, 8) of the attach- and detachable manipulator (2) for attachment and detachment by means of the other manipulator (1), releasing fixing of an attaching or detaching plane with an attaching and detaching mechanism (17, 20) on the attaching or detaching plane, and thereafter attaching and detaching the same based upon the information of said force sensor (5).

18. A manipulator (2) in which at least one of a joint element (7, 8) or an end effector (6) is provided with an attaching and detaching element (6, 7, 8),

the manipulator being characterized in that an attaching and detaching mechanism (17, 20) of said attaching and detaching element (7, 8, 6) includes a coupling mechanism of a bayonet method and a coupling mechanism of an electromagnet (18).

19. A detection method of position and attitude of an attaching or detaching plane, characterized by comprising the steps of providing a pair of element mechanisms having attach- and detachable coupling mechanisms (17, 18, 20), at least one of the mechanisms includes a rotational axis; providing three or more signal transmitting sources generating at least one of light, electromagnetic wave and acoustic wave signals multidirectionally on one of said coupling mechanisms (17, 18, 20); providing a receiver detecting signals from said signal transmitting sources on the other coupling mechanism on a spherical surface centering a point located on a straight line connecting the rotational center point of said rotational axis and the geometric center of gravity of said receiver; rotating said rotational axis;

obtaining directional data of said transmitting signal source from the received peak intensity in said receiver; and determining position and attitude of the attaching or detaching plane.

FIG. 1

FIG. 2

FIG. 3

14    12b    6

11a

15
13

11b

12a

7

FIG. 4

6

16

12

142

141

13

*FIG. 5*

*FIG. 6*

*FIG. 7*

FIG. 8

# FIG. 10

```
CONTENTS OF DATA BASE

JOINT ARRANGEMENT DATA JA[j] :
   JA[1]=(JM[1],JM[2],JM[4],JM[3],JM[6],JM[5],HM[1])
   JA[2]=(JM[1],JM[2],JM[3],JM[4],JM[5],JM[6],JM[7],HM[2])
             •                      •
             •                      •
             •                      •
JOINT ELEMENT DATA JD[i] :

                 1      2      3      4      5      6      7

   JD[JM[1]]=( * ,Pb1[1],Pb2[1],Pb3[1],P1[1],W[1],T[1] ⋯ )
   JD[JM[2]]=( # ,Pb1[2],Pb2[2],Pb3[2],P1[2],W[2],T[2] ⋯ )
   JD[JM[3]]=( * ,Pb1[3],Pb2[3],Pb3[3],P1[3],W[3],T[3] ⋯ )
   JD[JM[4]]=( # ,Pb1[4],Pb2[4],Pb3[4],P1[4],W[4],T[4] ⋯ )
   JD[JM[5]]=( * ,Pb1[5],Pb2[5],Pb3[5],P1[5],W[5],T[5] ⋯ )
   JD[JM[6]]=( # ,Pb1[6],Pb2[6],Pb3[6],P1[6],W[6],T[6] ⋯ )
   JD[JM[7]]=( * ,Pb1[7],Pb2[7],Pb3[7],P1[7],W[7],T[7] ⋯ )
   JD[JM[8]]=( # ,Pb1[8],Pb2[8],Pb3[8],P1[8],W[8],T[8] ⋯ )

             •                      •
             •                      •
             •                      •
```

1⋯KIND
2⋯STORAGE POSITION
3⋯POSITION OF ATTACHING OR DETACHING PLANE AT ROOT SIDE
4⋯POSITION OF ATTACHING OR DETACHING PLANE AT TOP END SIDE
5⋯HAND OPENING AND CLOSING AMOUNT
6⋯WEIGHT
7⋯COORDINATE TRANSFORMATION MATRIX
*⋯ROLL
#⋯PITCH

# FIG. 9

EP 0 441 397 A1

# FIG. 11

| MANIPULATOR OPERATION MODE |
|---|
| (1) JOINT ELEMENT GRIPPING MODE |
| (2) OPERATION MODE NEAR ATTACHING OR DETACHING PLANE |
| (3) GUIDE MODE |
| (4) INSERTING MODE |
| (5) ATTACHING AND DETACHING MECHANISM FIXING MODE |
| (6) VERTICAL ATTITUDE MODE |
| (7) MINIMUM POSITIONAL DISPLACEMENT ATTITUDE MODE |
| (8) STANDSTILL MODE |
| (9) GRIP ASSISTING OPERATION MODE |
| (10) ATTACHING AND DETACHING MECHANISM RELEASE MODE |
| (11) WITHDRAWING MODE |
| (12) MASTER-SLAVE MODE |
| (13) OBSTACLE AVOIDANCE MODE |

# FIG. 12

**(a) GRIPPING OF JOINT ELEMENT**

MANIPULATOR 1 TO JOINT GRIPPING MODE

SELECTION OF JOINT ELEMENT TO BE GRIPPED

SETTING OF OPERATION MODE OF MANIPULATOR 9

$$\text{WEIGHT OF JOINT ELEMENT} < \text{CARRIABLE WEIGHT OF MANIPULATOR 1}$$

MANIPULATOR 9 TO STANDSTILL MODE

MANIPULATOR 9 TO GRIP ASSISTING OPERATION MODE

SHIFT OF MANIPULATOR 1*¹ TO JOINT ELEMENT STORAGE POSITION

GRIPPING OF JOINT ELEMENT BY HAND OF MANIPULATOR 1*¹

**(b) ACCESS RANGE CALCULATION OF ATTACHING OR DETACHING PLANE**

ACCESS RANGE CALCULATION OF ATTACHING OR DETACHING PLANE AT ROOT SIDE OF JOINT ELEMENT GRIPPED BY MANIPULATOR 1*¹

ACCESS RANGE CALCULATION OF ATTACHING AND DETACHING PLANE AT TOP END OF MANIPULATOR 2

**(c) OPERATION MODE SETTING OF MANIPULATOR 2**

$$\text{POSITION OF ATTACHING OR DETACHING PLANE AT TOP END WHEN MANIPULATOR 2 IS VERTICAL ATTITUDE} < \text{ACCESS RANGE OF POSITION ATTACHING OR DETACHING PLANE AT ROOT SIDE OF JOINT ELEMENT GRIPPED BY MANIPULATOR 1*¹}$$

MANIPULATOR 2 TO VERTICAL ATTITUDE MODE

MANIPULATOR 2 TO MINIMUM POSITIONAL DISPLACEMENT ATTITUDE MODE

**(d)** SHIFTING OF ATTACHING OR DETACHING PLANE OF JOINT ELEMENT GRIPPED BY MANIPULATOR 1*¹ TO NEAR ATTACHING OR DETACHING PLANE AT TOP END OF MANIPULATOR 2

**(e)** GUIDE OF MANIPULATOR 1*¹ TO ATTACHING OR DETACHING PLANE AT TOP END OF MANIPULATOR 2 WITH PROXIMITY SENSOR

**(f)** INSERTION OF JOINT ELEMENT GRIPPED BY MANIPULATOR 1*¹ TO MANIPULATOR 2

**(g)** FIXING OF JOINT ELEMENT GRIPPED BY MANIPULATOR 1*¹ AT TOP END OF MANIPULATOR 2

NOTE) *1 : WHEN MANIPULATOR 9 IS IN GRIP ASSISTING MODE, MANIPULATOR 9 ALSO OPERATE IN COOPERATION WITH MANIPULATOR 1.

EP 0 441 397 A1

FIG. 13

EP 0 441 397 A1

FIG. 14

FIG. 15

$OA = a$
$OB = b$
$OC = c$

$AB = BC = CA = L$

FIG. 16

# FIG. 17

Graph axes:
- Y-axis: ATTACHING OR DETACHING PLANE INCHENATION MEASUREMENT ERROR [rad], with values $10^{-2}$, $10^{-3}$, $10^{-4}$
- X-axis: DISTANCE TO ATTACHING OR DETACHING PLANE [m], with values 0, 0.13, 0.26

TARGET PRECISION ($2° = 3.5 \times 10^{-2}$ [rad])

DISTANCE BETWEEN COUPLING PLANES

INCLINATION

JOINT ELEMENT

ARM

# FIG. 18

# FIG. 19

European
Patent Office

**EUROPEAN SEARCH
REPORT**

Application Number

**EP 91 10 1768**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 218 139  (MEIDENSHA)<br>* abstract *<br>— — — | 1,2,3,11, 12 | B 25 J 9/00<br>B 25 J 9/08<br>B 25 J 19/02 |
| Y | EP-A-0 108 657  (FUJITSU)<br>* page 9, line 16 - page 9, line 25; claim 1 *<br>— — — — — | 1,2,3,11, 12 | |

|  | TECHNICAL FIELDS SEARCHED (Int. Cl.5) |
|---|---|
|  | B 25 J |

The present search report has been drawn up for all claims

| Place of search | Date of completion of search | Examiner |
|---|---|---|
| The Hague | 10 May 91 | LAMMINEUR P.C.G. |